(19) Europäisches Patentamt / European Patent Office / Office européen des brevets

(11) **EP 3 898 285 B1**

(12) **FASCICULE DE BREVET EUROPEEN**

(45) Date de publication et mention de la délivrance du brevet:
**08.02.2023 Bulletin 2023/06**

(21) Numéro de dépôt: **19842822.9**

(22) Date de dépôt: **16.12.2019**

(51) Classification Internationale des Brevets (IPC):
***B60C 11/24*** *(1985.01)*  ***B60C 23/04*** *(1968.09)*

(52) Classification Coopérative des Brevets (CPC):
**B60C 11/246**

(86) Numéro de dépôt international:
**PCT/FR2019/053090**

(87) Numéro de publication internationale:
**WO 2020/128277 (25.06.2020 Gazette 2020/26)**

(54) **PROCEDE D'OBTENTION DE LA DEFORMATION D'UN PNEUMATIQUE SOUS CHARGE EN ROULAGE**

VERFAHREN ZUR ERHALTUNG DER VERFORMUNG EINES UNTER BELASTUNG FAHRENDEN REIFENS

METHOD FOR OBTAINING THE DEFORMATION OF A TYRE UNDER LOAD DURING RUNNING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2018 FR 1873890**
**30.01.2019 FR 1900870**

(43) Date de publication de la demande:
**27.10.2021 Bulletin 2021/43**

(73) Titulaire: **COMPAGNIE GENERALE DES ETABLISSEMENTS MICHELIN**
**63000 Clermont-Ferrand (FR)**

(72) Inventeur: **ALFF, Denis**
**63040 CLERMONT-FERRAND Cedex 9 (FR)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
WO-A1-2006/034731   WO-A1-2018/029320
DE-A1-102011 000 556

EP 3 898 285 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### Domaine de l'invention

La présente invention concerne les méthodes d'obtention de la déformation d'une enveloppe pneumatique d'un ensemble monté soumis à une charge en condition de roulage.

### Arrière-plan technologique

Pour le domaine des dispositifs et des méthodes de mesure de la déformation de l'ensemble monté, ceux-ci peuvent servir à caractériser le résultat de la déformation de l'enveloppe pneumatique due à la charge appliquée. Ainsi, les dispositifs et les méthodes cherchent à caractériser principalement l'empreinte au sol du pneumatique que l'on nomme aire de contact. En effet, la géomètre ou la répartition de contraintes au sein de cette aire de contact sont directement liées à la charge appliquée sur l'enveloppe pneumatique moyennant éventuellement la pression de gonflage de l'ensemble monté.

Cette aire de contact qui ne représente qu'un pourcentage minime de la périphérie de l'enveloppe pneumatique en condition monté gonflé est aussi très sensible à divers paramètres comme la macrorugosité du sol ou les irrégularités présentes sur le sol par exemple. En effet, la zone de contact réelle entre l'enveloppe pneumatique et le sol peut alors correspondre aux sommets des indenteurs caractérisant la macrorugosité du sol. Ainsi, la répartition des contraintes dans l'enveloppe pneumatique est modifiée pouvant influer sur les dimensions de l'aire de contact.

De plus, la détermination précise des dimensions de l'aire de contact est difficile à obtenir en condition de roulage. Classiquement en roulage, l'aire de contact se caractérise à l'aide de signaux représentatifs de la déformation de l'enveloppe pneumatique. Ceux-ci se manifestent par un saut important de la grandeur observée traduisant le passage de l'enveloppe pneumatique d'une forme toroïdale libre à une forme toroïdale partiellement écrasée à déplacement imposé. En effet, le sol constitue alors une condition aux limites de type déplacement imposé pour les points matériels de l'enveloppe pneumatique. Il est alors difficile d'identifier les points d'entrée ou de sortie exacts de l'aire de contact, d'autant plus qu'ils varient légèrement avec la nature du sol. De plus, l'aire de contact ne représente qu'une partie du développement de l'enveloppe pneumatique classiquement entre 1/20 et 1/10 du développement de la bande de roulement. Afin d'obtenir une image précise de cette portion du pneumatique, il faut disposer d'une discrétisation fine au niveau du signal de déformation. Ceci nécessite des espaces mémoires conséquents, des fréquences spatiales d'échantillonnage élevées au moins au niveau de l'aire de contact, et la mesure sur de nombreux tours de roue pour minimiser la dispersion liée au sol déjà évoquée, ce qui est consommateur en énergie.

On connait dans l'état de la technique, le document WO2017/32466A1 qui divulgue un dispositif de caractérisation de la charge appliquée à un ensemble monté sur la base d'un accéléromètre monté sur le pneumatique.

WO 2006/034731 A1, DE 10 2011 000556 A1, WO 2018/029320 A1 divulguent tout trois des mesures d'accélérations radiales sur un pneumatique. WO 2006/034731 A1 différencie en plus la mesure d'accélérations de part une valeur moyenne de celles-ci en fonction de la rotation de la roue.

La présente invention porte sur un procédé qui permet une évaluation précise de la déformation de l'enveloppe pneumatique en condition de roulage quel que soit la nature du sol tout en économisant l'énergie du dispositif de mesure.

L'invention est définie par le jeu de revendications ci-jointes.

### Description de l'invention

L'invention porte sur une méthode d'obtention de la déformation d'une enveloppe pneumatique soumise à une charge, dans un état gonflé et chargé tournant à une vitesse de rotation W. L'enveloppe pneumatique ayant un sommet, deux flancs et deux bourrelets de révolution autour d'un axe naturel de rotation et un plan médian, l'intersection du plan médian et de l'axe naturel de rotation définit un centre roue. La méthode comprend les étapes suivantes :

- Fixer au moins un capteur sur l'enveloppe pneumatique au droit du sommet ayant une position radiale R par rapport à l'axe naturel de rotation, apte à générer au moins un signal de sortie proportionnel à l'accélération subie par ledit capteur dans l'enveloppe pneumatique;

- Réaliser l'acquisition d'un premier signal représentant l'amplitude de l'accélération selon la direction normale au sommet lors d'un roulage à la vitesse de rotation W ;

- Délimiter le premier signal sur un nombre $N^{TdR}$ de tours de roue, $N^{TdR}$ étant supérieur ou égal à 1.0, préférentiellement $N^{TdR}$ est un entier, afin de construire un signal tour de roue $Sig^{TdR}$;

- Déterminer une accélération de référence $\gamma^{reference}$ fonction de la vitesse de rotation W et de la position du au moins un capteur ;

- Définir une première densité d'énergie S qui est fonction du signal tour de roue $Sig^{TdR}$ et de l'accélération de référence $\gamma^{reference}$, nommée $S^+$ lorsque le signal tour de roue est supérieur à un seuil A, ou nommée $S^-$ lorsque le signal tour de roue est inférieur ou égale audit seuil A ;

- Identifier la déformation de l'enveloppe pneumatique $Def_\%$ générée par la charge comme une fonction de l'accélération de référence $\gamma^{reference}$ et de la première densité d'énergie S liées à la position du au moins un capteur.

Comme dans l'état de la technique, il faut obtenir l'accélération d'un point matériel du pneumatique. Ici, il est important que l'accélération corresponde à sa composante normale au sommet puisque c'est cette composante qui est l'information principale de la déformation de l'enveloppe pneumatique. De plus il est préférable que cela soit l'accélération absolue du point matériel et non pas seulement sa composante alternative autour de la composante continue comme dans certaines méthodes de l'état de l'art. Cependant, si l'accélération délivrée par le capteur ne comprend pas la composante continue, il faut ajouter artificiellement cette composante continue comme étant l'accélération centrifuge résultant d'une position radiale R et d'une vitesse de rotation W. Préférentiellement, la position radiale R du capteur est déterminée dans un état gonflé et non chargé de l'ensemble monté. Ensuite, il faut délimiter le signal d'accélération sur une portion de tour de roue. Ici, il est important de pouvoir identifier, soit au travers du signal du capteur, soit du seul premier signal soit à l'aide d'un codeur tour de roue, le nombre de tours de roue lors de la délimitation du premier signal. Puis, on définit la vitesse de rotation W comme étant la vitesse de rotation moyenne sur la durée du signal tour de roue si la variation de vitesse de rotation est faible sur le signal tour de roue, c'est-à-dire inférieure à 15% par rapport à la vitesse moyenne. Si l'enveloppe pneumatique est à vitesse constante, c'est préférable car on élimine de nombreuses sources d'erreurs potentielles.

Ensuite, la simple comparaison du niveau d'accélération absolue du signal tour de roue avec une accélération de référence liée à la position radiale du capteur et au niveau de vitesse de rotation W permet de générer une densité d'énergie S. L'amplitude du signal tour de roue par rapport à un seuil A qui peut, par exemple, simplement être l'accélération de référence génère potentiellement un doublet de densités d'énergie de déformation positive et négative ($S^+$, $S^-$) à partir du signal tour de roue. Ainsi, la méthode ne fait que définir une densité d'énergie de déformation de l'enveloppe pneumatique et la distribuer dans deux sous-ensembles selon sa position par rapport au seuil A Ce sont des opérations simples à réaliser qui consomment peu de ressources. Bien entendu, pour être représentative, la méthode part de l'accélération absolue qui permet une comparaison aisée avec l'accélération de référence pour identifier le doublet de densités d'énergie.

Enfin, la méthode détermine la déformation de l'enveloppe pneumatique comme une fonction de la densité d'énergie calculée qu'elle norme sur la durée du signal tour de roue qui subirait une accélération de référence. Ainsi, la déformation représente une normalisation de l'énergie de déformation sur un tour de roue physique de l'enveloppe pneumatique. De ce fait, on identifie un invariant énergétique lié à la déformation de l'enveloppe pneumatique soumis à une charge en condition de roulage. Bien entendu, un seul tour de roue est nécessaire à la méthode. Cependant de façon préférentielle, le nombre de tours de roue sera d'au moins 5, voire 10 afin de moyenner les résultats ce qui permettra de s'affranchir de phénomènes aléatoires sur le signal comme par exemple des obstacles sur la chaussée sur laquelle roule l'enveloppe pneumatique. Ainsi, la précision de la méthode s'en trouve améliorée en mode industriel.

Préférentiellement, la déformation de l'enveloppe pneumatique soumise à une charge est déterminée par la formule suivante :

[Math 1]

$$Def_\% = \frac{(S)}{(N^{TdR} * \gamma^{Reference})}$$

Ainsi, c'est une formule élémentaire de la déformation de l'enveloppe pneumatique qui s'applique soit à $S^+$, soit à $S^-$ Nécessairement, $S^-$ correspond à la densité d'énergie calculées à partir des points matériels du développement du pneumatique , qui a un instant T précis, comprennent ceux de l'aire de contact ou à sa proximité immédiate. En effet ceux-ci ont une accélération absolue proche de zéro lors de la traversée de l'aire de contact, ils sont donc nécessairement inférieur au seuil A. Par défaut la densité d'énergie $S^+$ correspond à la densité d'énergie des autres points du développement du pneumatique et notamment ceux en dehors de l'aire de contact. Lorsque l'accélération de référence $\gamma^{reference}$ à partir de laquelle sont calculées les densités d'énergie $S^+$ et $S^-$ est égale à la valeur moyenne du signal tour de roue $Sig^{TdR}$ la déformation évaluée à l'aide de $S^+$ ou de $S^-$, on obtient le même résultat aux incertitudes de mesure prés.

Cela met en évidence que l'on se trouve en présence d'un invariant lié à la déformation de l'enveloppe pneumatique soumise à une charge Z. Dans le cas où on n'utilise que $S^+$, il n'est pas nécessaire d'avoir une discrétisation spatiale élevée puisque les variations en dehors de l'aire de contact sont moins fortes. Cela a pour avantage de réduire la fréquence d'échantillonnage nécessaire du dispositif électronique couplée au capteur ou de pouvoir obtenir une information précise sur la déformation de l'enveloppe pneumatique a des vitesse de rotations élevées.

Très préférentiellement, la déformation de l'enveloppe pneumatique soumise à une charge est déterminée par la formule suivante :

[Math 2]

$$Def_{\%} = \frac{(S^+ + S^-)}{(2 * N^{TdR} * \gamma^{Reference})}$$

Dans ce cas, il faut cumuler l'énergie de déformation du pneumatique sur la totalité du développement du pneumatique. Afin de minimiser à coup sur les incertitudes de mesure, on utilise alors l'ensemble des points de mesure de l'accélération normale au sommet pour déterminer la déformation de l'enveloppe pneumatique ce qui permet de réduire la consommation énergétique comparativement à une analyse avec une fréquence d'échantillonnage élevée.

Selon un mode de réalisation privilégié, la délimitation du premier signal sur un nombre $N^{TdR}$ s'effectue par le passage du premier signal en dessous ou au-dessus d'un seuil inférieur ou égal à la moitié de la valeur de l'accélération de référence $\gamma^{reference}$.

Dans ce mode de réalisation, on n'emploie que le premier signal pour délimiter celui-ci sur un nombre entier de tour de roue. En effet, le signal d'accélération selon la direction radiale d'une enveloppe pneumatique soumise à une charge va nécessairement tendre vers zéro lors de la traversée de l'aire de contact par le capteur si on néglige le signal de la gravité terrestre comme pour des vitesses de rotation élevées. Ainsi, le premier signal passera nécessairement au niveau d'un seuil situé en dessous au moins de la moitié de l'accélération de référence $\gamma^{reference}$. En fait, le premier signal passera à deux reprises au niveau de ce seuil par tour de roue. Ces passages correspondent schématiquement à la zone d'entrée et de sortie de l'aire de contact. De ce fait, on ne prenant que l'un des sens de passage, passage en dessous de ce seuil ou au-dessus de ce seuil, on obtient un indicateur de tour de roue à partir du premier signal du capteur. Du fait de la discrétisation spatiale grossière qui peut être employée, cette détection est suffisante pour la méthode d'évaluation de la déformation de l'enveloppe pneumatique.

Avantageusement, le seuil A est fonction l'accélération de référence $\gamma^{reference}$.

Le seuil A permet de dissocier les densités d'énergie positif et négatif de la méthode.

En effet, tout signal de mesure est bruité. Il est possible de filtrer, ou lisser ce signal en temps réel, mais au risque de perdre de l'information, notamment la dynamique du passage dans l'aire de contact. Par définition, ce bruit est de valeur moyenne sensiblement nulle. Et si, en théorie, il ne doit pas ou peu affecter le calcul des densités d'énergie $S^+$ et $S^-$, il est susceptible de perturber la classification dans $S^+$ ou $S^-$, et donc fausser le résultat final. Ce seuil A a pour objectif de permettre de ranger les variations entre le signal de tour de roue et l'accélération de référence selon l'une ou l'autre des densités d'énergie, en tenant compte des variations du signal de tour de roue dues à des perturbations et un mauvais rapport signal/bruit, ces perturbations pouvant provenir de la macrorugosité de la route, d'obstacles ponctuels rencontrés sur la route, des vibrations propres au pneumatique ou au véhicule sur lequel il est monté, ou des petits dysfonctionnements électromagnétiques de la chaîne de mesure inhérents à la nature et la qualité des composants électroniques utilisés. Comme le signal tour de roue et l'accélération de référence dépendent de la vitesse de rotation W de l'ensemble monté et de la position radiale du capteur, il semble opportun de rendre dépendant la valeur seuil A de l'accélération de référence pour s'affranchir de ces perturbations qui pourrait polluer la précision souhaitée.

Très avantageusement, le seuil A est fonction d'un facteur C selon la formule suivante :

[Math 3]

$$A = C * \gamma^{Reference}$$

Préférentiellement, le facteur C est supérieur ou égal à 0,5 et inférieur ou égal à 0,9.

Cette valeur du facteur C permet à la fois de dissocier la densité d'énergie positive et négative sur le signal tour de roue. En effet, lors du passage dans l'aire de contact, le signal tour de roue tend vers zéro. De plus, la transition au niveau de l'entrée et la sortie de l'aire de contact est très forte, très rapide et d'un profil toujours sensiblement identique. Ainsi, une valeur de 0,5 permet de ne pas trop diminuer le nombre de points de mesure qui seront affectés à la densité d'énergie négative $S^-$ ou augmenter ceux qui sont affectés à $S^+$. En effet, l'objectif de la méthode est d'employer une discrétisation spatiale peu élevée. Généralement, peu de points de mesure sont situées au niveau de la zone de transition. De ce fait, l'erreur commise sur S⁻ et sur S⁺ est minime voire nulle si aucun point de mesure ne se trouve dans la zone de sélection correspondante à C entre 0,5 et 0,9. Elle sera en outre répétitive si on utilise un coefficient C figé proportionnel à $\gamma^{Reference}$ pour toutes les caractérisations, et l'erreur éventuellement induite sera reproductible donc transparente par rapport à un niveau de référence défini par ailleurs.

A l'inverse, une valeur de C égale à un est la valeur théorique qui permet de dissocier les points entre les deux densités d'énergie possibles. Si cela est idéal sur des sols lisses avec des conditions optimales minimisant les perturbations sur la chaîne de mesure. La moindre perturbation peut impacter la précision requise sur le résultat.

De façon préférentielle, l'acquisition du premier signal est effectuée pour une vitesse de rotation W supérieure ou égale à une vitesse de rotation seuil $W_{seuil}$ définie par la formule suivante :

[Math 6]

$$W_{seuil} = \frac{12}{\sqrt{Dev}}$$

- où Dev est le développement de l'enveloppe pneumatique.

Ainsi, si la vitesse de roulage est au-delà de la valeur seuil, il est aisé de dissocier le signal tour de roue par rapport à la valeur seuil A et ce quels que soient les aléas dans le signal tour de roue comme, par exemple, une forte macrorugosité de la chaussée, des perturbations électromagnétiques dans la chaine de mesure, des vibrations au niveau de l'enveloppe pneumatique. De plus, cela permet aussi d'identifier plus nettement le signal de la gravité dans le signal tour de roue.

Selon un premier mode de réalisation, la détermination de l'accélération de référence $\gamma^{reference}$ s'effectue par la formule suivante :

[Math 4]

$$\gamma^{reference} = R * W^2$$

L'accélération de référence $\gamma^{reference}$ correspond à un état neutre de l'enveloppe pneumatique pour lequel la charge est nulle. En pratique, cela se traduit par un ensemble monté comprenant l'ensemble monté qui roule sans se déformer au sol afin de constituer une aire de contact. Finalement, cela correspond à l'accélération que subirait le capteur si il était monté sur l'enveloppe pneumatique celle-ci tourne librement autour de son axe naturel de rotation.

De ce fait, l'accélération de référence $\gamma^{reference}$ est alors simplement l'accélération centrifuge subie par le capteur monté sur l'enveloppe pneumatique tournant librement. L'identification de l'accélération de référence nécessite alors la détermination de deux paramètres, la position radiale du capteur par rapport à l'axe naturel de rotation et la vitesse de rotation W de l'enveloppe pneumatique sur laquelle est fixé le capteur.

Selon un deuxième mode de réalisation la détermination de l'accélération de référence $\gamma^{reference}$ est définie par la valeur moyenne du signal tour de roue $Sig^{TdR}$.

En effet, en cas d'absence d'information sur la déformée de l'enveloppe pneumatique dans un état monté gonflé ce qui ne permet pas d'identifier exactement la position radiale du capteur sur l'enveloppe pneumatique, il est possible de déterminer l'accélération de référence à l'aide de la valeur moyenne du signal tour de roue $Sig^{TdR}$.

En effet la méthode estime que dans son état de rotation libre à la vitesse de rotation W, l'enveloppe pneumatique ou tout capteur qui lui est attaché subi une accélération centrifuge proportionnelle à sa position radiale par rapport à l'axe naturel de rotation. De plus, lors de la mise sous charge par l'écrasement de l'enveloppe pneumatique sur un sol rigide, l'enveloppe pneumatique se déforme de façon à répartir l'énergie de déformation générée par cette charge entre deux situations. La première situation correspond à la condition de déplacement imposé au niveau de l'aire de contact tendant à diminuer l'énergie centrifuge. L'autre situation correspond à la condition d'énergie imposée sur l'enveloppe pneumatique hors de l'aire de contact. L'énergie imposée est alors le complémentaire de la diminution de l'énergie centrifuge correspondant à la première situation. De ce fait, la valeur moyenne du signal tour de roue , sur un nombre entier de tours de roue, que l'enveloppe pneumatique soit ou non soumis à une charge Z, correspond à l'accélération centrifuge subie par le capteur.

Préférentiellement, ayant phasé le signal tour de roue $Sig^{TdR}$ par rapport à une position angulaire de l'enveloppe pneumatique, une correction Corr est apportée au signal tour de roue $Sig^{TdR}$ pour prendre en compte l'effet de la gravité terrestre.

La correction de la gravité terrestre permet de minimiser l'erreur sur la déformation de l'enveloppe pneumatique en particulier pour les vitesses de roulage W basses. En effet, le capteur, lors du roulage de l'enveloppe pneumatique, fait une révolution autour de l'axe naturel de rotation. Le signal de sortie du capteur étant proportionnel à l'accélération radiale sera pollué par la gravité terrestre. Sur un tour de roue, la gravité terrestre va générer un signal sinusoïdal d'amplitude g qui est fonction de l'altitude du capteur dans le repère de la Terre. Il faut donc retirer ce signal parasite Corr du signal tour de roue $Sig^{TdR}$ ce qui nécessite un recalage du signal tour de roue par rapport à une position angulaire de l'enveloppe pneumatique.

Bien entendu, plus la vitesse de rotation W de l'enveloppe pneumatique est élevée, plus l'accélération centrifuge subie par le capteur devient prédominant par rapport à ce signal parasite.

Selon un premier mode de réalisation, la détermination des densités d'énergie négative S⁻ et positive S⁺ s'effectue à l'aide des formules suivantes :

[Math 5a]

$$S^+ = \left| \int_{SigTdR > A}^{U} \left( Sig^{TdR} - \gamma^{Reference} \right) * du \right| ;$$

et

[Math 5b]

$$S^- = \left| \int_{SigTdR \leq A}^{U} \left( Sig^{TdR} - \gamma^{Reference} \right) * du \right| ;$$

- Où u est l'abscisse du signal tour de roue $Sig^{TDR}$.

Ainsi, dans le cas d'un signal continu, la détermination des densités d'énergie S⁺ et S⁻ s'effectuent par les formules ci-dessus.

Selon un mode de réalisation particulier, l'acquisition du premier signal est effectuée à une fréquence d'échantillonnage constante et la discrétisation spatiale d'échantillonnage du premier signal est inférieure à 6 degrés, préférentiellement inférieure à 3 degrés, très préférentiellement inférieure à 1 degré.

Par exemple si on souhaite que l'évaluation de la déformation de l'enveloppe pneumatique ait lieu au niveau de l'ensemble monté, il faut que le capteur soit associé à un organe électronique comprenant un microcontrôleur, un espace mémoire, une batterie et une horloge. Alors, la discrétion spatiale envisagée avec une fréquence d'échantillonnage constante permet de réaliser des opérations élémentaires au niveau du microcontrôleur en minimisant la consommation de la batterie. De plus, la discrétisation minimale de l'ordre de 60 points au tour de roue permet de limiter le nombre d'opérations et de transfert vers l'espace mémoire. Pour autant, la précision obtenue sur la déformation de l'enveloppe pneumatique est bonne tout en ayant économisé la batterie de l'organe électronique. Cela permet de ne stocker ou de ne transférer que des valeurs scalaires intermédiaires de la méthode.

Selon un mode de réalisation très particulier la détermination des densités d'énergie négative S⁻ et positive S⁺ sont obtenues à l'aide des formules suivantes :

[Math 7a]

$$S^+ = \left| \sum_{Sig^{TDR} > A} \left( Sig^{TDR} - \gamma^{Reference} \right) \right| * \frac{\gamma^{TdR}}{N^U} ;$$

et

[Math 7b]

$$S^{\sim} = \left| \Sigma_{Sig^{TdR} \leq A}(Sig^{TdR} - \gamma^{Reference}) \right| * \frac{N^{TdR}}{N^{U}} \quad ;$$

- Où $N^{U}$ est le nombre total de points discrétisés sur le signal tour de roue $Sig^{TdR}$ .

C'est une façon simple d'obtenir une valeur scalaire de chaque densité d'énergie à partir du signal discrétisé du signal tour de roue.

Selon un mode de réalisation très particulier l'accélération de référence $\gamma^{reference}$ est définie par la formule suivante :

[Math 8]

$$\gamma^{reference} = \frac{\left( \Sigma_{Sig^{TdR}} Sig^{TdR} \right)}{N^{u}} \quad ;$$

- Où $N^{U}$ est le nombre total de points discrétisés sur le signal tour de roue $Sig^{TdR}$

Dans le cas où l'évaluation de l'accélération de référence $\gamma^{Reference}$ est évaluée comme la valeur moyenne du signal tour de roue sur un nombre fini de tour de roue, c'est une façon simple et rapide d'obtenir une évaluation de la grandeur scalaire.

Selon un mode de réalisation préférentiel, la déformation de l'enveloppe pneumatique soumise à une charge est déterminée par la formule suivante :

[Math 9a]

$$Def_{\%} = \frac{\left| \Sigma_{Sig^{TdR}>A_0}(Sig^{TdR} - \gamma^{Reference}) \right|}{\left( \Sigma_{Sig^{TdR}} Sig^{TdR} \right)} \quad ;$$

ou

[Math 9b]

$$Def_{\%} = \frac{\left| \Sigma_{Sig^{TdR} \leq A}(Sig^{TdR} - \gamma^{Reference}) \right|}{\left( \Sigma_{Sig^{TdR}} Sig^{TdR} \right)} \quad ;$$

ou

[Math 9c]

$$Def_{\%} = \frac{\left| \Sigma_{Sig^{TdR}>A}(Sig^{TdR} - \gamma^{Reference}) \right| + \left| \Sigma_{Sig^{TdR} \leq A}(Sig^{TdR} - \gamma^{Reference}) \right|}{2 * \left( \Sigma_{Sig^{TdR}} Sig^{TdR} \right)} \quad .$$

En outre, en optant pour une évaluation de l'accélération de référence $\gamma^{reference}$ sous la forme de la valeur moyenne du signal tour de roue on fait apparaitre avantageusement au numérateur et au dénominateur de la formule de calcul de $Def_{\%}$ une mesure réalisée par le même capteur, ce qui signifie que le résultat sera insensible à toute dérive des caractéristiques de ce capteur induite par les éléments extérieurs.

C'est la forme la plus simple et la plus élémentaire pour identifier la déformation de l'enveloppe pneumatique à partir des grandeurs discrétisés du signal tour de tour. Les trois formules sont théoriquement équivalentes aux erreurs générées par la discrétisation du signal tour de roue.

**Description brève des dessins**

L'invention sera mieux comprise à la lecture de la description qui va suivre dans le cas d'une application à des bandages pneumatiques. Cette application est donnée uniquement à titre d'exemple et faite en se référant aux figures annexées dans lesquelles :

- La Fig 1 est l'exemple d'un premier signal de la méthode.
- La Fig 2 représente le signal tour de roue $Sig^{TDR}$ et son identification à partir d'un premier signal.
- La Fig 3 représente le signal tour de roue $Sig^{TdR}$ lors d'un roulage à vitesse de rotation W variable.
- La Fig 4 représente le second signal tour de roue $Sig^{TdR2}$ lors d'un roulage à vitesse de rotation W constante sur un tour.

**Description détaillée de modes de réalisation**

Pour la mise en oeuvre de l'invention, il faut équiper une enveloppe pneumatique d'un organe électronique comprenant un capteur, un microcontrôleur, une horloge, un espace mémoire et un moyen de stockage d'énergie, et des moyens de communications Radio Fréquence en émission et éventuellement en réception. L'enveloppe pneumatique comprend un sommet, deux flancs et deux bourrelets de révolution autour d'un axe naturel de rotation. L'enveloppe comprend aussi un plan médian équidistant des deux bourrelets, l'intersection du plan médian et de l'axe naturel de rotation définissant un centre roue.

Le capteur est fixé sur l'enveloppe pneumatique au droit du sommet, au droit d'un rib ou d'un sillon longitudinal qui sont des zones de rigidité homogène, à une position radiale R fixe par rapport à l'axe naturel de rotation. Le capteur est apte à générer au moins un signal de sortie proportionnel à l'accélération normale au sommet subie par le capteur dans l'enveloppe pneumatique. En fait, ce capteur peut être monoaxe, auquel cas, il faut le positionner de façon radiale. Il peut aussi être aussi constitué d'une pluralité de capteurs monoaxes. Dans ce cas, il convient de bien identifier l'orientation de chacun des capteurs monoaxes par rapport au repère de l'enveloppe pneumatique afin de reconstruire l'accélération normale au sommet de l'enveloppe pneumatique. Idéalement, le capteur prend en compte la composante continue et la composante alternative de l'accélération. Dans le cas où seule la composante alternative est mesurée par le capteur, il conviendra pour la mise en oeuvre de la méthode de construire artificiellement la composante continue. Pour cela, il faut alors identifier la vitesse de rotation W de l'enveloppe pneumatique en temps réel et connaitre avec précision la position radiale R du capteur. En effet, la composante continue sera évaluée comme l'accélération centrifuge du capteur par rapport à l'axe naturel de rotation de l'enveloppe pneumatique. Le capteur dans le cas de la prise en compte de la composante continue peut être un accéléromètre de technologie piezorésistive ou capacitive.

L'organe électronique est alimenté par le moyen de stockage d'énergie, est piloté par le microcontrôleur à l'aide l'horloge et dans lequel sont aussi implantés les algorithmes de calcul qui permettent de déterminer par exemple l'état de déformation du pneumatique en utilisant les signaux issus de l'élément capteur. Les moyens de communication RF d'émission servent à transmettre les informations calculées, et ceux de réception de recevoir des instructions de fonctionnement ou des informations utiles dans les algorithmes de calcul. Idéalement, cet organe électronique comprends ou est associé d'autres éléments de mesures (tels que pression, température, niveau d'usure, distance parcourue, etc...) afin de mutualiser les organes et optimiser les coûts de mise en oeuvre.

Ici, le capteur est mis en route par l'intermédiaire du microcontrôleur lorsque l'enveloppe pneumatique est en condition de roulage. Bien entendu, on peut sélectionner une valeur seuil de vitesse de rotation W à partir de laquelle l'acquisition d'un signal en sortie du capteur est effectuée. L'organe électronique dispose d'un espace mémoire adaptée au type d'analyse que l'on souhaite effectuer. En fait la capacité de cet espace mémoire est prédéfinie selon l'usage de l'organe électronique. C'est le microcontrôleur qui pilote le rangement des valeurs du capteur vers l'espace mémoire. De plus, le microcontrôleur est apte à effectuer des opérations mathématiques et logiques élémentaires sur un nombre de données réduites. Si, les opérations mathématiques et logiques sont plus complexes ou que le nombre de données à manipuler devient conséquent, le microcontrôleur est remplacé par un microprocesseur. Enfin l'organe électronique est alimenté en énergie par un moyen de stockage. Le plus simple comme moyen de stockage est l'utilisation d'une batterie. Cependant, une capacité de grande dimension rechargeable à l'aide d'un élément piezo électrique pourrait être envisagée

La gamme de fréquence de l'organe électronique permet de couvrir une large bande de vitesse de rotation W avec une discrétisation spatiale de moins 6 degrés. Selon un mode de réalisation particulier, la fréquence d'échantillonnage est adaptative sur commande ou en réponse à un signal comme par exemple la vitesse de rotation W de l'enveloppe pneumatique.

De façon optionnelle, l'organe électronique contient ou et apte à obtenir l'identification de l'enveloppe pneumatique. Cette information est utile pour choisir un set de données utiles pour les algorithmes de calculs au niveau de l'organe électronique. Si, l'organe électronique doit obtenir l'identification du pneumatique ou recevoir des commandes pour effectuer une mesure, l'organe électronique est équipé d'un moyen de réception radiofréquence. Celui-ci fonctionne dans la gamme des basses fréquences, idéalement à la fréquence de 125KHz afin de s'affranchir des perturbations générées par les zones métalliques de l'enveloppe pneumatique et de son environnement proche dans le véhicule.

Selon un mode de réalisation spécifique, l'organe électronique dispose de moyens d'émission radiofréquence, spécifiquement dans la bande UHF (acronyme de Ultra Hautes fréquences), en particulier aux alentours de 433MHZ ou 900MHz ou la bande dite BLE (acronyme en anglais de Bluetooth Low Emission) qui constituent des bandes de fréquences libres. De plus, la bande des UHF permet d'avoir des tailles d'antenne réduites facilitant l'intégration de l'organe électronique au sein de l'enveloppe pneumatique.

Cette communication en émission est utile pour transmettre les données de la méthode vers le véhicule ou l'extérieur du véhicule. Il est possible soit d'émettre le train de données correspondant à l'acquisition du signal tour de roue ou de transmettre des résultats intermédiaires qui auront été calculés au niveau de l'organe électronique. Ce second mode d'émission est nécessairement moins couteux en énergie pour l'organe électronique puisque le flux de données est moins conséquent. Or, l'émission radiofréquence est un poste consommateur en énergie par rapport à des opérations mathématiques et logiques.

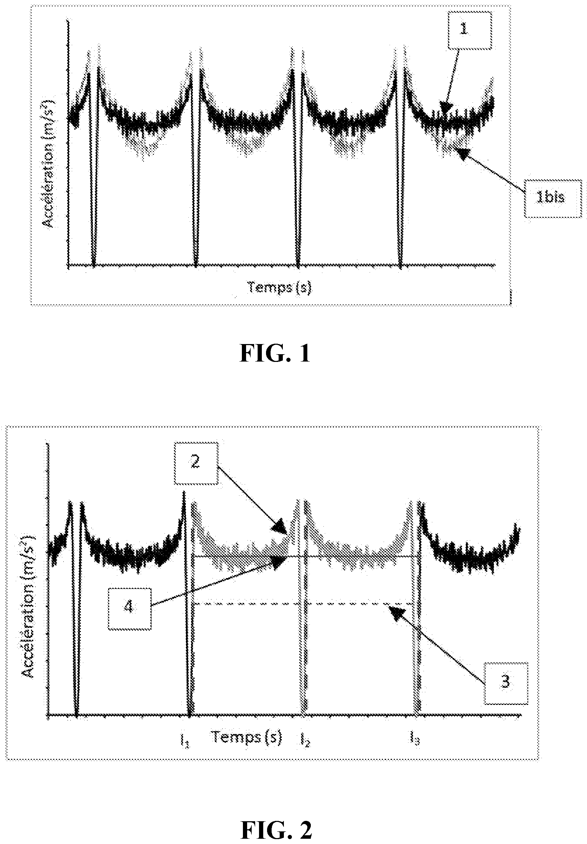

La Fig 1 présente un premier signal 1bis brut en gris correspondant à l'accélération normale au sommet d'une enveloppe pneumatique de type poids lourd roulant à une vitesse de rotation W constante. Régulièrement, de façon périodique, la courbe 1bis passe par une valeur quasi nulle. Ce phénomène périodique correspond à la traversée de l'aire de contact de l'enveloppe pneumatique par le capteur. La transition entre le passage du capteur entre l'aire de contact du pneumatique et l'autre partie de l'enveloppe pneumatique s'effectue brutalement au travers de fronts descendants ou montants selon que l'on soit à l'entrée ou la sortie de l'aire de contact. De plus, on note que le premier signal 1bis à une échelle de l'ordre du tour de roue suit une porteuse, le premier signal 1bis oscille à une fréquence plus élevée que la fréquence du tour de roue autour de cette porteuse. Ces oscillations correspondent aux bruits du premier signal 1bis du capteur dus aux divers aléas dont la macrorugosité de la route.

La courbe indexée 1 en noir, représente le même signal accélérométrique corrigé seulement de la gravité terrestre que l'on nommera premier signal corrigé 1. La correction est ici sinusoïdale en ayant phasé la correction sur un point situé au centre de l'aire de contact, c'est-à-dire à égal distance des deux fronts délimitant la partie du signal dont la valeur est quasi nulle. On observe que le premier signal 1 est plus plat entre les zones caractérisant l'aire de contact. Il est préférable d'effectuer les diverses étapes de la méthode sur ce premier signal corrigé 1.

La Fig 2 présente la méthode de détection du signal tour de roue 2. A partir du premier signal 1, ici corrigé pour mieux expliciter l'exemple, on détermine un seuil E, illustré par la ligne pointillée 3. On identifie une série d'incréments I lorsque que le premier signal 1 franchit la ligne pointillée 3 par exemple par le dessous ce qui correspond physiquement à une sortie de l'aire de contact par le capteur lié solidairement en rotation à l'enveloppe pneumatique. On délimite alors le premier signal tour de roue 2 entre un premier incrément, ici $I_i$, et un second incrément, ici $I_3$. Le signal tour de roue représente ici le signal accélérométrique du capteur sur deux tours de roue complets.

La valeur seuil E représentée par la ligne pointillée 3 a été évaluée dans notre cas sur une partie du premier signal 1 avec une fréquence d'échantillonnage variable. On extrait sur cette partie du premier signal 1, la valeur maximale discrétisée obtenue que l'on nomme MAX. La valeur seuil E est alors une valeur comprise entre 10 et 50% de la valeur MAX, dans notre cas, cette valeur est d'environ 50%.

On calcule comme la valeur moyenne du signal tour de roue 2, l'accélération de référence $\gamma^{reference}$ qui est représentée par la ligne continue 4 en noir Son évaluation est faite en temps réel, en cumulant les valeurs des incréments u du premier signal tour de roue que l'on, divise à la fin du signal tour de roue par le nombre d'incréments du premier signal tour de roue.Bien entendu, le calcul peut aussi être fait après que l'enregistrement complet du signal tour de roue 2 a été enregistré et stocké en mémoire.

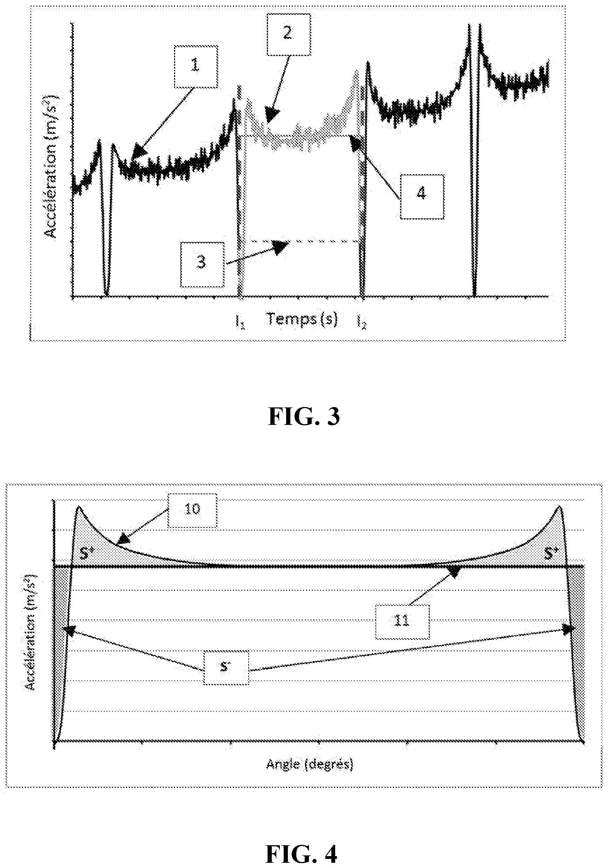

La Fig 3 présente un premier signal 1, préalablement corrigé de la gravité terrestre correspondant à l'accélération normale au sommet d'une enveloppe pneumatique de type poids lourd roulant à une vitesse de rotation W variable.

Ici, on détermine des seuils E, représenté par la ligne pointillée 3, pour le signal tour de roue 2 en gris clair.

Le premier seuil E permet d'identifier les incréments I correspondant par exemple à la sortie de l'aire de contact par le capteur. Dans cette analyse, le signal tour de roue $Sig^{TdR}$ est limité à un tour de roue ce qui est préférentiel pour limiter les erreurs liées à la variation de la vitesse de rotation W de l'enveloppe pneumatique. Le seuil E a été choisi afin qu'il corresponde à la moitié de l'accélération de référence du premier signal délimité sur un nombre entier de tour de roue effectuée avant le signal tour de roue 2. On calcule aussi, sur ce signal tour de roue 2, l'accélération de référence $\gamma^{reference}$ comme la valeur moyenne du signal tour de roue 2, illustré par la courbe continue 4.

On notera aussi que du fait de la vitesse de rotation W variable ici en phase d'accélération, la période associée au tour de roue diminue ce qui se traduit par des fronts montants ou descendants de plus en plus proche

La Fig 4 est une illustration pour expliciter le calcul des densités d'énergie positive S+ et négative S- sur un signal tour de roue 10 correspond à un seul tour de roue lorsque la vitesse de rotation W est constante. Bien entendu, la méthode est identique si la vitesse de rotation W est variable ou que le signal tour de roue est délimité sur plusieurs tour de roue.

On détermine le seuil A comme étant ici le produit d'une valeur C, ici égale à 1.0, par l'accélération de référence $\gamma^{reference}$ identifié sur le signal tour de roue en post traitement de l'acquisition du signal tour de roue. Ce seuil est matérialisé par la ligne continue 11. En fait, il est préférable sur des signaux réels de prendre une valeur de C égal à 0, 7. Si les signaux sont fortement perturbés, on peut choisir une valeur de C égal à 0,5 ou 0,6. En revanche, pour des signaux obtenus sur des chaussées globalement lisses, une valeur de C de l'ordre de 0, 8 ou 0, 9 peut être employée. Il faut que cette valeur C soit figée pour toutes les étapes de la méthode.

On calcule les densités d'énergie positive S$^+$ ou négative S$^-$ comme la sommation des valeurs absolues des différences entre le signal tour de roue 10 et l'accélération de référence $\gamma^{reference}$, représentée par la courbe continue 11. Nécessairement, la surface délimitée par les surfaces S$^+$ est égale à la surface délimitée par la surface S$^-$.

## Revendications

1. Méthode d'obtention de la déformation d'une enveloppe pneumatique soumise à une charge, dans un état gonflé et chargé tournant à une vitesse de rotation W, la dite enveloppe pneumatique ayant un sommet, deux flancs et deux bourrelets de révolution autour d'un axe naturel de rotation et un plan médian, l'intersection du plan médian et de l'axe naturel de rotation définissant un centre roue, comprenant les étapes suivantes :

   - Fixer au moins un capteur sur l'enveloppe pneumatique au droit du sommet ayant une position radiale R par rapport à l'axe naturel de rotation apte à générer au moins un signal de sortie proportionnel à l'accélération subie par ledit capteur dans l'enveloppe pneumatique;
   - Réaliser l'acquisition d'un premier signal comprenant au moins l'amplitude de l'accélération selon la direction normale au sommet lors d'un roulage à la vitesse de rotation W;
   - Délimiter le premier signal sur un nombre N$^{TdR}$ de tours de roue, N$^{TdR}$ étant supérieur ou égale à 1, préférentiellement N$^{TdR}$ est un entier, afin de construire un signal tour de roue ;
   - Déterminer une accélération de référence $\gamma^{reference}$ fonction de la vitesse de rotation W et de la position du au moins un capteur ;
   - Définir une première densité d'énergie S qui est fonction du signal tour de roue et de l'accélération de référence $\gamma^{reference}$, nommée S$^+$ lorsque le signal tour de roue est supérieur à un seuil A, ou nommée S$^-$ lorsque le signal tour de roue est inférieur ou égale audit seuil A ;
   - Identifier la déformation de l'enveloppe pneumatique générée par la charge comme une fonction de l'accélération de référence $\gamma^{reference}$ et de la première densité d'énergie S liées à la position du au moins un capteur.

2. Méthode d'obtention de la déformation d'une enveloppe pneumatique selon la revendication 1 dans laquelle l'identification de la déformation de l'enveloppe pneumatique soumise à une charge est déterminée par la formule suivante :

[Math 1]

$$Def_{\%} = \frac{(S)}{(N^{TdR} * \gamma^{Reference})}$$

3. Méthode d'obtention de la déformation d'une enveloppe pneumatique selon la revendication 1 dans laquelle l'identification de la déformation de l'enveloppe pneumatique soumise à une charge est déterminée par la formule suivante :

[Math 2]

$$Def_{\%} = \frac{(S^+ + S^-)}{(2 * N^{TdR} * \gamma^{Reference})}$$

4. Méthode d'obtention de la déformation d'une enveloppe pneumatique selon l'une des revendications 1 à 3 dans laquelle la délimitation du premier signal sur un nombre N$^{TdR}$ s'effectue par le passage du premier signal en dessous ou au-dessus d'un seuil inférieur ou égal à la moitié de la valeur de l'accélération de référence $\gamma^{reference}$.

5. Méthode d'obtention de la déformation d'une enveloppe pneumatique selon l'une des revendications 1 à 4 dans laquelle le seuil A pour définir la première densité d'énergie est fonction l'accélération de référence $\gamma^{reference}$.

6. Méthode d'obtention de la déformation d'une enveloppe pneumatique selon la revendication 5 dans laquelle le seuil A pour définir la première densité d'énergie est fonction d'un facteur C, le facteur C est supérieur ou égal à 0,5 et inférieur ou égal à 0.9, selon la formule suivante :

[Math 3]

$$A = C * \gamma^{Reference}$$

7. Méthode d'obtention de la déformation d'une enveloppe pneumatique selon l'une quelconque des revendications 1 à 6 dans laquelle, la détermination de l'accélération de référence $\gamma^{reference}$ est définie par la formule suivante :

[Math 4]

$$\gamma^{reference} = R * W^2$$

8. Méthode d'obtention de la déformation d'une enveloppe pneumatique selon l'une quelconques des revendications 1 à 6 dans laquelle la détermination de l'accélération de référence $\gamma^{reference}$ est définie comme la valeur moyenne du signal tour de roue $Sig^{TdR}$.

9. Méthode d'obtention de la déformation d'une enveloppe pneumatique selon l'une des revendications précédentes dans laquelle, ayant phasé le signal tour de roue $Sig^{TdR}$ par rapport à une position angulaire de l'enveloppe pneumatique, une correction Corr est apportée au signal tour de roue $Sig^{TdR}$ pour prendre en compte l'effet de la gravité terrestre.

10. Méthode d'obtention de la déformation d'une enveloppe pneumatique selon l'une des revendications 1 à 9 dans laquelle la définition des densités d'énergie négative S⁻ et positive S⁺ sont obtenus par les formules suivantes :

[Math 5a]

$$S^+ = \left| \int_{Sig^{TdR}>A}^{U} (Sig^{TdR} - \gamma^{Reference}) * du \right| \quad ;$$

et

[Math 5b]

$$S^- = \left| \int_{Sig^{TdR} \leq A}^{U} (Sig^{TdR} - \gamma^{Reference}) * du \right| \quad ;$$

Où u est l'abscisse du signal tour de roue $Sig^{TdR}$.

11. Méthode d'obtention de la déformation d'une enveloppe pneumatique selon l'une quelconque des revendications 1 à 10 dans laquelle, l'acquisition du premier signal est effectuée pour une vitesse de rotation W supérieure ou égale à une vitesse de rotation seuil $W_{seuil}$ définie par la formule suivante :

[Math 6]

$$W_{seuil} = \frac{12}{\sqrt{Dev}} \quad ;$$

Où Dev est le développement de l'enveloppe pneumatique.

12. Méthode d'obtention de la déformation d'une enveloppe pneumatique selon l'une quelconque des revendications 1 à 11 dans laquelle, l'acquisition du premier signal est effectuée à une fréquence d'échantillonnage constante et la discrétisation spatiale d'échantillonnage du premier signal est inférieure à 6 degrés, préférentiellement inférieure à 3 degrés, très préférentiellement inférieure à 1 degré.

13. Méthode d'obtention de la déformation d'une enveloppe pneumatique selon la revendication 12 dans laquelle la définition des densités d'énergie négative $S^-$ et positive $S^+$ sont obtenues par les formules suivantes :

[Math 7a]

$$S^+ = \left| \sum_{Sig^{TdR} > \Delta} (Sig^{TdR} - \gamma^{Reference}) \right| \times \frac{N^{TdR}}{N^U} \quad ;$$

et

[Math 7b]

$$S^- = \left| \sum_{Sig^{TdR} < \Delta} (Sig^{TdR} - \gamma^{Reference}) \right| \times \frac{N^{TdR}}{N^U} \quad ;$$

Où $N^U$ est le nombre total de points discrétisés sur le signal tour de roue $Sig^{TdR}$.

14. Méthode d'obtention de la déformation d'une enveloppe pneumatique selon la revendication 12 dans laquelle la détermination de l'accélération de référence $\gamma^{reference}$ est définie par la formule suivante :

[Math 8]

$$\gamma^{reference} = \frac{\left( \sum_{Sig^{TdR}} Sig^{TdR} \right)}{N^u} \quad ;$$

Où $N^U$ est le nombre total de points discrétisés sur le signal tour de roue $Sig^{TdR}$.

15. Méthode d'obtention de la déformation d'une enveloppe pneumatique selon la combinaison des revendications 13 et 14, dans laquelle l'identification de la déformation de l'enveloppe pneumatique soumise à une charge est déterminée par la formule suivante :

[Math 9a]

$$Def_{\%} = \frac{\left| \sum_{Sig^{TdR} > \Delta} (Sig^{TdR} - \gamma^{Reference}) \right|}{\left( \sum_{Sig^{TdR}} Sig^{TdR} \right)} \quad ;$$

ou

[Math 9b]

$$Def_{\%} = \frac{\left|\sum_{Sig^{TdR}} (Sig^{TdR} - \gamma^{reference})\right|}{\left(\sum_{Sig^{TdR}} Sig^{TdR}\right)} \quad ;$$

ou

[Math 9c]

$$Def_{\%} = \frac{\left|\sum_{Sig^{TdR}_+} (Sig^{TdR} - \gamma^{reference})\right| + \left|\sum_{Sig^{TdR}_-} (Sig^{TdR} - \gamma^{reference})\right|}{2 * \left(\sum_{Sig^{TdR}} Sig^{TdR}\right)} \quad .$$

**Patentansprüche**

1. Verfahren zum Erhalten der Verformung einer einer Last unterliegenden Drucklufthülle, die in einem aufgeblasenen und belasteten Zustand ist und sich mit einer Drehgeschwindigkeit W dreht, wobei die Drucklufthülle eine Lauffläche, zwei Seitenflächen und zwei Wulste, die um eine natürliche Drehachse und eine Medianebene rotationssymmetrisch sind, besitzt, wobei der Schnittpunkt der Medianebene mit der natürlichen Drehachse ein Radzentrum definiert, das die folgenden Schritte umfasst:

   - Befestigen wenigstens eines Sensors an der Drucklufthülle am Ort der Lauffläche, der eine radiale Position R in Bezug auf die natürliche Drehachse besitzt und wenigstens ein Ausgangssignal erzeugen kann, das zu der Beschleunigung, der der Sensor in der Drucklufthülle unterliegt, proportional ist;
   - Ausführen der Erfassung eines ersten Signals, das wenigstens die Amplitude der Beschleunigung in der Richtung senkrecht zu der Lauffläche enthält, bei einem Rollen mit der Drehgeschwindigkeit W;
   - Begrenzen des ersten Signals auf eine Anzahl $N^{TdR}$ von Radumdrehungen, wobei $N^{TdR}$ größer oder gleich 1 ist, wobei $N^{TdR}$ vorzugsweise eine ganze Zahl ist, um ein Radumdrehungssignal zu konstruieren;
   - Bestimmen einer Referenzbeschleunigung $\gamma^{reference}$ als Funktion der Drehgeschwindigkeit W und der Position des wenigstens einen Sensors;
   - Definieren einer ersten Energiedichte S als Funktion des Radumdrehungssignals und der Referenzbeschleunigung $\gamma^{reference}$, die $S^+$ genannt wird, wenn das Radumdrehungssignal größer als ein Schwellenwert A ist, oder $S^-$ genannt wird, wenn das Radumdrehungssignal kleiner oder gleich dem Schwellenwert A ist;
   - Identifizieren der Verformung der Drucklufthülle, die durch die Last erzeugt wird, als Funktion der Referenzbeschleunigung $\gamma^{reference}$ und der ersten Energiedichte S, die mit der Position des wenigstens einen Sensors in Beziehung stehen.

2. Verfahren zum Erhalten der Verformung einer Drucklufthülle nach Anspruch 1, wobei das Identifizieren der Verformung der Drucklufthülle, die einer Last unterliegt, durch die folgende Formel bestimmt ist:

   [Math 1]

   $$Def_{\%} = \frac{(S)}{(N^{TdR} * \gamma^{Reference})}$$

3. Verfahren zum Erhalten der Verformung einer Drucklufthülle nach Anspruch 1, wobei das Identifizieren der Verformung der Drucklufthülle, die einer Last unterliegt, durch die folgende Formel bestimmt ist:

   [Math 2]

   $$Def_{\%} = \frac{(S^+ + S^-)}{(2 * N^{TdR} * \gamma^{Reference})}$$

4. Verfahren zum Erhalten der Verformung einer Drucklufthülle nach einem der Ansprüche 1 bis 3, wobei die Begrenzung des ersten Signals auf eine Anzahl $N^{TdR}$ durch den Übergang des ersten Signals unter oder über einen Schwellenwert, der kleiner oder gleich der Hälfte des Wertes der Referenzbeschleunigung $\gamma^{reference}$ ist, erfolgt.

5. Verfahren zum Erhalten der Verformung einer Drucklufthülle nach einem der Ansprüche 1 bis 4, wobei der Schwellenwert A für die Definition der ersten Energiedichte eine Funktion der Referenzbeschleunigung $\gamma^{reference}$ ist.

6. Verfahren zum Erhalten der Verformung einer Drucklufthülle nach Anspruch 5, wobei der Schwellenwert A für die Definition der ersten Energiedichte eine Funktion eines Faktors C, der größer oder gleich 0,5 und kleiner oder gleich 0,9 ist, gemäß der folgenden Formel ist:

[Math 3]

$$A = C * \gamma^{Reference}$$

7. Verfahren zum Erhalten der Verformung einer Drucklufthülle nach einem der Ansprüche 1 bis 6, wobei die Bestimmung der Referenzbeschleunigung $\gamma^{reference}$ durch die folgende Formel definiert ist:

[Math 4]

$$\gamma^{reference} = R * W^2$$

8. Verfahren zum Erhalten der Verformung einer Drucklufthülle nach einem der Ansprüche 1 bis 6, wobei die Bestimmung der Referenzbeschleunigung $\gamma^{reference}$ als der Mittelwert des Radumdrehungssignals $Sig^{TdR}$ definiert ist.

9. Verfahren zum Erhalten der Verformung einer Drucklufthülle nach einem der vorhergehenden Ansprüche, wobei dann, wenn die Phase des Radumdrehungssignals SigTdR an eine Winkelposition der Drucklufthülle angepasst worden ist, an dem Radumdrehungssignal $Sig^{TdR}$ eine Korrektur Corr vorgenommen wird, um die Wirkung der Schwerkraft zu berücksichtigen.

10. Verfahren zum Erhalten der Verformung einer Drucklufthülle nach einem der Ansprüche 1 bis 9, wobei die Definitionen der negativen Energiedichte $S^-$ und der positiven Energiedichte $S^+$ durch die folgenden Formeln erhalten werden:

[Math 5a]

$$S^+ = \left| \int_{SigTdR>A}^{U} (Sig^{TdR} - \gamma^{Reference}) * du \right|$$ ;

und

[Math 5b]

$$S^- = \left| \int_{SigTdR \leq A}^{U} (Sig^{TdR} - \gamma^{Reference}) * du \right|$$ ,

wobei u die Abszisse des Radumdrehungssignals $Sig^{TdR}$ ist.

11. Verfahren zum Erhalten der Verformung einer Drucklufthülle nach einem der Ansprüche 1 bis 10, wobei die Erfassung des ersten Signals für eine Drehgeschwindigkeit W erfolgt, , die größer oder gleich einer Schwellen-Drehgeschwindigkeit $W_{seuil}$ ist, die durch die folgende Formel definiert ist

[Math 6]

$$W_{seuil} = \frac{12}{\sqrt{Dev}} \quad ,$$

wobei Dev die Abwicklung der Drucklufthülle ist.

12. Verfahren zum Erhalten der Verformung einer Drucklufthülle nach einem der Ansprüche 1 bis 11, wobei die Erfassung des ersten Signals bei einer konstanten Abtastfrequenz erfolgt und die räumliche Diskretisierung der Abtastung des ersten Signals kleiner als 6 Grad, vorzugsweise kleiner als 3 Grad und am stärksten bevorzugt kleiner als 1 Grad ist.

13. Verfahren zum Erhalten der Verformung einer Drucklufthülle nach Anspruch 12, wobei die Definitionen der negativen Energiedichte $S^-$ und der positiven Energiedichte $S^+$ durch die folgenden Formeln erhalten werden:

[Math 7a]

$$S^+ = \left| \sum_{Sig^{TdR}>A} (Sig^{TdR} - \gamma^{Reference}) \right| * \frac{N^{TdR}}{N^U} \quad ;$$

und

[Math 7b]

$$S^- = \left| \sum_{Sig^{TdR}\leq A} (Sig^{TdR} - \gamma^{Reference}) \right| * \frac{N^{TdR}}{N^U} \quad ,$$

wobei $N^U$ die Gesamtzahl der diskretisierten Punkte in dem Radumdrehungssignal $Sig^{TdR}$ ist.

14. Verfahren zum Erhalten der Verformung einer Drucklufthülle nach Anspruch 12, wobei die Bestimmung der Referenzbeschleunigung $\gamma^{reference}$ durch die folgende Formel definiert ist:

[Math 8]

$$\gamma^{reference} = \frac{\left( \sum_{Sig^{TdR}} Sig^{TdR} \right)}{N^u} \quad ,$$

wobei $N^U$ die Gesamtzahl der diskretisierten Punkte in dem Radumdrehungssignal $Sig^{TdR}$ ist.

15. Verfahren zum Erhalten der Verformung einer Drucklufthülle nach der Kombination der Ansprüche 13 und 14, wobei die Identifizierung der Verformung der Drucklufthülle, die einer Last unterliegt, durch die folgende Formel bestimmt ist:

[Math 9a]

$$Def_\% = \frac{\left| \sum_{Sig^{TdR}>A_o} (Sig^{TdR} - \gamma^{Reference}) \right|}{\left( \sum_{Sig^{TdR}} Sig^{TdR} \right)} \quad ;$$

oder

[Math 9b]

$$Def_\% = \frac{\left| \sum_{Sig^{TdR}\leq A} (Sig^{TdR} - \gamma^{Reference}) \right|}{\left( \sum_{Sig^{TdR}} Sig^{TdR} \right)} \quad ;$$

oder

[Math 9c]

$$Def_\% = \frac{\left|\sum_{Sig^{TdR}>A}(Sig^{TdR} - \gamma^{Reference})\right| + \left|\sum_{Sig^{TdR}\leq A}(Sig^{TdR} - \gamma^{Reference})\right|}{2 * \left(\sum_{Sig^{TdR}} Sig^{TdR}\right)}$$

.

**Claims**

1. Method for obtaining the deformation of a tyre casing subjected to a load, in an inflated and laden state rotating at a rotational speed W, said tyre casing having a crown, two sidewalls and two beads of revolution about a natural axis of rotation and a median plane, the intersection between the median plane and the natural axis of rotation defining a wheel centre, comprising the following steps:

   - fixing at least one sensor on the tyre casing in line with the crown at a radial position R with respect to the natural axis of rotation and able to generate at least one output signal proportional to the acceleration experienced by said sensor in the tyre casing;
   - acquiring a first signal comprising at least the amplitude of the acceleration in the direction normal to the crown when running at the rotational speed W;
   - delimiting the first signal over a number $N^{TdR}$ of wheel revolutions, $N^{TdR}$ being greater than or equal to 1, $N^{TdR}$ being preferably a whole number, so as to construct a wheel revolution signal;
   - determining a reference acceleration $\gamma^{reference}$ that is a function of the rotational speed W and of the position of the at least one sensor;
   - defining a first energy density S which is a function of the wheel revolution signal, and of the reference acceleration $\gamma^{reference}$, and which is denoted $S^+$ when the wheel revolution signal is above a threshold value A, or is denoted $S^-$ when the wheel revolution signal is below or equal to said threshold value A;
   - identifying the deformation of the tyre casing, which deformation is generated by the load as a function of the reference acceleration $\gamma^{reference}$ and of the first energy density S which are associated with the position of the at least one sensor.

2. Method for obtaining the deformation of a tyre casing according to Claim 1, wherein the identification of the deformation of the tyre casing subjected to a load is determined using the following formula:

[Math 1]

$$Def_\% = \frac{(S)}{(N^{TdR} * \gamma^{Reference})}$$

3. Method for obtaining the deformation of a tyre casing according to Claim 1, wherein the identification of the deformation of the tyre casing subjected to a load is determined using the following formula:

[Math 2]

$$Def_\% = \frac{(S^+ + S^-)}{(2 * N^{TdR} * \gamma^{Reference})}$$

4. Method for obtaining the deformation of a tyre casing according to one of Claims 1 to 3, wherein the delimitation of the first signal over a number $N^{TdR}$ of wheel revolutions is achieved by the first signal crossing below or above a threshold value less than or equal to half the value of the reference acceleration $\gamma^{reference}$.

5. Method for obtaining the deformation of a tyre casing according to one of Claims 1 to 4, wherein the threshold value A for defining the first energy density is a function of the reference acceleration $\gamma^{reference}$.

6. Method for obtaining the deformation of a tyre casing according to Claim 5, wherein the threshold value A for defining the first energy density is a function of a factor C, the factor C being greater than or equal to 0.5 and less than or equal to 0.9, using the following formula:

[Math 3]

$$A = C * \gamma^{Reference}$$

7. Method for obtaining the deformation of a tyre casing according to any one of Claims 1 to 6, wherein the determination of the reference acceleration $\gamma^{reference}$ is defined using the following formula:

[Math 4]

$$\gamma^{reference} = R * W^2$$

8. Method for obtaining the deformation of a tyre casing according to any one of Claims 1 to 6, wherein the determination of the reference acceleration $\gamma^{reference}$ is defined as being the mean value for the wheel revolution signal $Sig^{TdR}$.

9. Method for obtaining the deformation of a tyre casing according to one of the preceding claims, wherein, having phased the wheel revolution signal $Sig^{TdR}$ with respect to an angular position of the tyre casing, a correction Corr is made to the wheel revolution signal $Sig^{TdR}$ to take account of the effect of the Earth's gravity.

10. Method for obtaining the deformation of a tyre casing according to one of Claims 1 to 9, wherein the energy densities that are negative $S^-$ and positive $S^+$ are defined according to the following formulae:

[Math 5a]

$$S^+ = \left| \int_{SigTdR>A}^{U} (Sig^{TdR} - \gamma^{Reference}) * du \right|$$

;

and

[Math 5b]

$$S^- = \left| \int_{SigTdR\leq A}^{U} (Sig^{TdR} - \gamma^{Reference}) * du \right|$$

;

where u is the abscissa value of the wheel revolution signal $Sig^{TdR}$.

11. Method for obtaining the deformation of a tyre casing according to any one of Claims 1 to 10, wherein the acquisition of the first signal is performed for a rotational speed W greater than or equal to a threshold rotational speed $W_{seuil}$ defined by the following formula:

[Math 6]

$$W_{seuil} = \frac{12}{\sqrt{Dev}}$$

;

where Dev is the development of the tyre casing.

12. Method for obtaining the deformation of a tyre casing according to any one of Claims 1 to 11, wherein the acquisition of the first signal is performed at a constant sampling frequency and the spatial discretization of the sampling of the first signal is less than 6 degrees, preferably less than 3 degrees, and very preferably less than 1 degree.

13. Method for obtaining the deformation of a tyre casing according to Claim 12, wherein the energy densities that are negative S⁻ and positive S⁺ are defined according to the following formulae:

[Math 7a]

$$S^+ = \left| \Sigma_{Sig^{TdR}>A}(Sig^{TdR} - \gamma^{Reference}) \right| * \frac{N^{TdR}}{N^U} ;$$

and

[Math 7b]

$$S^- = \left| \Sigma_{Sig^{TdR}\leq A}(Sig^{TdR} - \gamma^{Reference}) \right| * \frac{N^{TdR}}{N^U} ;$$

where $N^U$ is the total number of points discretized in the wheel revolution signal $Sig^{TdR}$.

14. Method for obtaining the deformation of a tyre casing according to Claim 12, wherein the determination of the reference acceleration $\gamma^{reference}$ is defined using the following formula:

[Math 8]

$$\gamma^{reference} = \frac{\left( \Sigma_{Sig^{TdR}} Sig^{TdR} \right)}{N^u} ;$$

where $N^U$ is the total number of points discretized in the wheel revolution signal $Sig^{TdR}$.

15. Method for obtaining the deformation of a tyre casing according to a combination of Claims 13 and 14, wherein the identification of the deformation of the tyre casing subjected to a load is determined using the following formula:

[Math 9a]

$$Def_\% = \frac{\left| \Sigma_{Sig^{TdR}>A_o}(Sig^{TdR} - \gamma^{Reference}) \right|}{\left( \Sigma_{Sig^{TdR}} Sig^{TdR} \right)} ;$$

or

[Math 9b]

$$Def_\% = \frac{\left| \Sigma_{Sig^{TdR}\leq A}(Sig^{TdR} - \gamma^{Reference}) \right|}{\left( \Sigma_{Sig^{TdR}} Sig^{TdR} \right)} ;$$

or

[Math 9c]

$$Def_\% = \frac{\left| \Sigma_{Sig^{TdR}>A}(Sig^{TdR} - \gamma^{Reference}) \right| + \left| \Sigma_{Sig^{TdR}\leq A}(Sig^{TdR} - \gamma^{Reference}) \right|}{2 * \left( \Sigma_{Sig^{TdR}} Sig^{TdR} \right)} .$$

**FIG. 1**

**FIG. 2**

**FIG. 3**

**FIG. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 201732466 A1
- WO 2006034731 A1
- DE 102011000556 A1
- WO 2018029320 A1